# EUROPEAN PATENT APPLICATION

(11) **EP 4 663 515 A1**
(43) Date of publication of application: **17.12.2025**
(21) Application number: 24182070.3
(22) Date of filing: 13.06.2024
(51) Int. Cl.: B62D 5/093, B62D 5/32

(54) **HYDRAULIC STEERING UNIT**

(71) Applicant: Danfoss Power Solutions ApS, 6430 Nordborg (DK)
(72) Inventor: Olesen, Emil Nørregard, 6430 Nordborg (DK)
(74) Representative: Keil & Schaafhausen Patentanwälte PartGmbB

(57) **Abstract**

The present invention relates to a hydraulic steering unit (1) comprising a supply port arrangement configured to supply hydraulic working pressure (P_{CF}) via a working flow path arrangement to a steering mechanic (2). The working flow path arrangement comprises at least a first working flow path (8) with a first port (R) configured to be fluidically connected to the steering mechanic (2) and a second working flow path (9) with a second port (L) configured to be fluidically connected to the steering mechanic (2). Further, a measuring motor (13) is arranged in one of the working flow paths (8, 9) of the working flow path arrangement. Furthermore, the working flow path arrangement is configured to supply a hydraulic auxiliary pressure provided by the measuring motor (13) via each of the ports (R, L), when the hydraulic working pressure (P_{CF}) is below a predetermined threshold value. In order to provide an improved hydraulic steering unit, an auxiliary flow path (11) between the first working flow path (8) and the second working flow path (9) is generated, when the hydraulic working pressure (P_{CF}) is below the predetermined threshold value.

## Description

The present invention relates to a hydraulic steering unit comprising a supply port arrangement configured to supply hydraulic working pressure via a working flow path arrangement to a steering mechanic.

Various types of hydraulic steering systems are known in the art in order to steer a steering mechanic of a vehicle, i.e. to apply load to the steering mechanic. The steering of the steering mechanic may result in a change of an angle of wheels of the vehicle with respect to a steering axis, thereby changing a direction of movement of the vehicle. The vehicle may for example be a vehicle which is mainly used off-road, such as a construction vehicle, an agriculture vehicle, a mining vehicle or alike, or may be a vehicle which is mainly used on-road, such as a truck or a bus. An exemplary hydraulic steering unit is for example known from DE 10 2017 109 795 A1.

In general, the hydraulic working pressure in the hydraulic steering unit may drop or decrease for various reasons, one of which is that, for example, a supply unit, such as a pump, supplying the hydraulic working pressure becomes faulty. A steering direction that may be changed in a fully functional steering system during normal steering, for example by actuating a steering wheel, resulting in different fluid paths being opened up, is then no longer possible. However, it would be unfavorable if in this situation it were no longer possible to change the steering direction and wheels of a vehicle had to remain in their position. Consequently, it is known to provide options that enable steering, i.e. actuation of the steering mechanic, even in an emergency steering situation in which normal steering by the steering wheel is no longer possible. In this regard, it is, for example, known to arrange a measuring motor in a working flow path of the hydraulic steering unit in order to supply hydraulic pressure to the steering mechanic in an emergency situation. Steering in an emergency steering situation may thus be achieved in an emergency steering mode.

However, known hydraulic steering units used in a hydraulic steering system for steering in an emergency steering mode have several disadvantages. Either, for example, a measuring motor used for emergency steering in an emergency situation is arranged permanently in only one of the various working flow paths that supply hydraulic fluid to the steering mechanic, so that only one side of the steering mechanic may be operable, which basically means that emergency steering may only be possible in one direction, for example only to the right, or the measuring motor is switched between the working flow paths depending on the steering direction, which is typically complex.

In addition, for example, hydraulic steering units that close a connection to a hydraulic reservoir such as a tank when the hydraulic working pressure decreases are disadvantageous when using redundant systems, i.e. in hydraulic steering systems in which at least two hydraulic steering units are used, as it may be the case with fully automatic and remotely controlled vehicles. This is due to the fact that the hydraulic steering unit which will do the emergency steering may then prevent steering being possible with the other hydraulic steering unit. In addition, by closing a connection to the tank, it may also not possible for the steering mechanic to absorb shocks, as pressure that would increase may then not be relieved to the tank.

It is therefore an object of the present invention to provide an improved hydraulic steering unit which allows for improved steering conditions in an emergency steering mode. In particular, it is the object of the present invention to provide a hydraulic steering unit which enables steering in an emergency steering mode in both steering directions essentially equally well.

This object is solved by a hydraulic steering unit according to claim 1 as well as by a method of operating a steering mechanic according to claim 15.

The hydraulic steering unit comprises a supply port arrangement configured to supply hydraulic working pressure via a working flow path arrangement to a steering mechanic. The supply port arrangement may for example comprise a high pressure port and a low pressure port. The low pressure port may for example be connected to a tank. The high pressure port may be connected to a pump which may provide hydraulic fluid at hydraulic working pressure. The pump may for example be driven by motor. The motor may be part of a vehicle, wherein the hydraulic steering unit may be used to operate the steering mechanic of the vehicle based on the hydraulic working pressure at least in a normal steering mode, i.e. when the pressure supply to the supply port arrangement is properly functioning.

The working flow path arrangement may comprise several orifices which may be opened or closed in order to conduct hydraulic fluid, e.g. oil, in different ways through the working flow path arrangement. Consequently, this may result in a change in pressure of the supplied hydraulic fluid at hydraulic working pressure to the supply port arrangement. The orifices in the working flow path arrangement may be opened manually by use of a steering wheel or automatically by respective control units, for example used for remote steering of the vehicle. The arrangement of the at least some of the orifices may form a hydraulic bridge.

Further, the working flow path arrangement comprises at least a first working flow path with a first port and a second working flow path with a second port. The ports may be either directly or indirectly, for example via fluid lines, connected to a steering mechanic. Consequently, the first port and the second port are configured to be fluidically connected to the steering mechanic. The working flow paths and the corresponding ports are thus configured to provide hydraulic fluid which has been initially introduced at hydraulic working pressure to the hydraulic steering unit, for example by a pump, to the steering mechanic.

Therefore, the steering mechanic may be provided by at least one hydraulic cylinder configured to be moved by providing pressurized hydraulic fluid. The hydraulic cylinder may be a double-acting cylinder. More precisely, the hydraulic cylinder may be a symmetric cylinder which may comprise a piston rod on opposite sides. The steering mechanic may be directly coupled to wheels of a vehicle, so that movement of the hydraulic cylinder, and thus the piston rods may move the wheels of the vehicle. Therefore, the steering mechanic of the hydraulic steering system may allow for steering a vehicle. However, the steering mechanic could also have an asymmetrical cylinder instead.

Further, a measuring motor is arranged in one of the working flow paths of the working flow path arrangement. A measuring motor may thus be either arranged in the first working flow path or the second working flow path. In other words, the measuring motor may either be arranged in the first working flow path with the first port or in the second working flow path with the second port. This means that hydraulic fluid which passes through the working flow path, in which the measuring motor is arranged, also passes through the measuring motor.

When the working flow path, in which the measuring motor is arranged, is used to supply hydraulic fluid to the steering mechanic, the measuring motor may detect the amount of hydraulic fluid which has passed through the measuring motor. The detection of the amount of hydraulic fluid which has passed through the measuring motor may be used to operate, adjust or close (at least partially close) a valve or an orifice or the like in order to limit or interrupt the amount of hydraulic fluid passing through the respective working flow path to the steering mechanic depending on the amount of hydraulic fluid which has passed the measuring motor.

In one aspect, a single measuring motor may be arranged in only one of the working flow paths. In other words, if there are two or more working flow paths, only one of them may be provided with a measuring motor.

The measuring motor is further configured to provide a hydraulic auxiliary pressure. Hydraulic auxiliary pressure may for example be provided in cases in which no longer or not at all hydraulic working pressure is provided via the supply port arrangement to the hydraulic steering unit. In this regard, the measuring motor may for example function as a pump. The measuring motor may for example be a bi-rotating pump motor. The hydraulic auxiliary pressure may typically be lower than the hydraulic working pressure and may be provided in emergency situations in which the hydraulic working pressure decreases or drops below a predetermined threshold value. Hence, the hydraulic auxiliary pressure may be present in an emergency steering mode, in which the hydraulic working pressure initially provided, for example by a pump in a normal steering mode, becomes too low. In other words, the working flow path arrangement is configured to supply the hydraulic auxiliary pressure provided by the measuring motor via each of the ports, for example in an emergency situation, when the hydraulic working pressure decreases below a predetermined threshold value.

As changes in pressure in hydraulic systems are normal to a certain extent, the predetermined threshold value should be chosen so that this threshold value actually gives an indication that there is a fault in the hydraulic steering system. The predetermined threshold value may thus be set to indicate an emergency steering situation or a nonfunctioning hydraulic fluid supply via the supply port arrangement. In other words, when the hydraulic working pressure is initially below or decreases below the predetermined value, the hydraulic steering unit may be considered in an emergency steering mode.

Further, when the hydraulic working pressure is below the predetermined threshold value, i.e. the hydraulic working pressure has never been greater than or equal to the predetermined threshold value or the hydraulic working pressure has decreased below the predetermined threshold value, an auxiliary flow path between the first working flow path and the second working flow path is generated. In this context, "generated" may also mean opened, formed or the like. Basically, the auxiliary flow path may be present all the time, i.e. the fluid line of the auxiliary flow path may also be present when hydraulic working pressure is present in the hydraulic system, i.e. when the hydraulic working pressure is for example above the predetermined threshold value. However, at that time, no hydraulic fluid having hydraulic working pressure may flow through the auxiliary flow path from the first working flow path to the second working flow path and vice versa. In other words, the auxiliary flow paths may be blocked when the hydraulic working pressure has not decreased below the predetermined threshold value or has increased from a value below the predetermined threshold value to the predetermined threshold value or above.

Thus, when the hydraulic working pressure is below the predetermined threshold value, the auxiliary flow path, which fluidically connects the two working flow paths, is generated. This means that although the measuring motor may only be located in one of the working flow paths, due to the auxiliary flow path, the measuring motor is configured to supply hydraulic auxiliary pressure via both, the first working flow path and the second working flow path. This means that the measuring motor may pump hydraulic fluid in one direction to supply the steering mechanic with hydraulic auxiliary pressure via one of the ports and in the opposite direction to supply the other port with hydraulic auxiliary pressure. A flow direction of the measuring motor functioning as a pump may thus be changed.

The aforementioned general structural concept of the hydraulic steering unit does not exclude that the hydraulic steering unit comprises further fluid paths or lines, valves, orifices or the like. For example, in one aspect, the first port and the second port may (each) be fluidically connected to a tank flow path, i.e. a flow path to a hydraulic reservoir such as a tank, by separate flow paths, for example by pressure compensation paths. These flow paths, for example the pressure compensation paths, connecting the first port and the second port to the tank flow path may each comprise a check valve. Thus, when pressure at one port becomes too low, i.e. when negative pressure becomes too high, the check valve in the fluid path that fluidically connects this port to the tank via the tank flow path may open and allow hydraulic fluid to flow from the tank to this port. Cavitation may therefore be prevented at both ports.

Further, in one aspect, the tank may also be fluidically connected to the ports via each one of the working flow paths. In other words, in one example, in addition to the aforementioned connection by flow paths such as pressure compensation flow paths comprising check valves to the tank, the first port and the second port may both be fluidically connected to the tank via corresponding working flow paths. Orifices may be arranged in the flow paths from the tank to the ports. In this regard, a hydraulic bridge comprising orifices may for example be used. Depending on whether hydraulic pressure is supplied via the first port to the steering mechanic or whether hydraulic pressure is supplied via the second port to the steering mechanic, the specific flow path connection of the ports to the tank via the corresponding working flow paths may be established via different further flow paths. This means that orifices arranged in the flow paths may open or close flow paths depending on which port is used to supply hydraulic pressure to the steering mechanic.

By using the auxiliary flow path to fluidically connect the first working flow path and the second working flow path when the hydraulic pressure is below a predetermined threshold value, it is therefore possible to apply hydraulic pressure to the hydraulic steering mechanic via the first port and the second port essentially equally well. Therefore, in an emergency steering mode or in an emergency steering situation, in which the hydraulic working pressure has decreased below the predetermined threshold value, the steering conditions may be improved.

In one embodiment, the measuring motor as part of the hydraulic steering unit may be permanently arranged in one of the at least two working flow paths. In other words, the measuring motor may always be arranged in one of the at least two working flow paths. "Permanently" may thus be understood as a condition which is not changing or ending. Thus, independent of any opening or closing of flow paths of the working flow path arrangement, the measuring motor remains in the same working flow path. Therefore, when the measuring motor may be permanently arranged in the one of the working flow paths and hydraulic fluid is supplied to the steering mechanic via the respective port of this working flow path, in which the measuring motor is permanently arranged or located, the hydraulic fluid is passing through the measuring motor. Hence, even when the first and second working flow paths are fluidically connected by the auxiliary flow path, the measuring motor remains in the working flow path in which the measuring motor is initially arranged, i.e. before generating the auxiliary flow path. In other words, the hydraulic fluid has not only to pass the measuring motor in order to be supplied via one of the ports, for example the first port, to the steering mechanic before the auxiliary flow path is generated, but the hydraulic fluid must also pass through the measuring motor when the auxiliary flow path has been generated. The permanent arrangement of the measuring motor allows for a simple structural configuration of the hydraulic steering unit and clarifies that only a single measuring motor may be required to permit hydraulic fluid to be supplied to the respective side, i.e. via the respective port, to the steering mechanic via the auxiliary flow path.

According to one embodiment, the auxiliary flow path may be generated by actuation of a hydraulic component. In other words, a hydraulic component may be present in the hydraulic steering unit which is responsible for generating the auxiliary flow path. In this regard, the hydraulic component may be arranged in one of the working flow paths and may provide a connection from said working flow path to the auxiliary flow path. Further, the hydraulic component may be switched between two states. A first state in which the hydraulic working pressure is above or equal to the predetermined threshold value and the auxiliary flow path between the first working flow path and the second working flow path is not generated. And a second state in which the hydraulic working pressure has decreased below the predetermined threshold value and the auxiliary flow path between the first working flow path and the second working flow path has been generated. Hence, a hydraulic component can be any component that is configured to perform switching between these two states described above, for example. Accordingly, the hydraulic component may be, for example, a valve, an orifice or the like. Preferably, the auxiliary flow path may be generated by a single hydraulic component, e.g., by a single valve. Thus, instead of for example two valves opening and generating the auxiliary flow path, only one valve may be needed. Generally speaking, generating the auxiliary flow path with a hydraulic component enables a simple and uncomplicated setup of the hydraulic steering unit, which is particularly inexpensive.

In a further preferred aspect, the hydraulic component and the measuring motor are arranged in the same working flow path. Consequently, the hydraulic component and the measuring motor may for example both be arranged in the first or in the second working flow path. In order to fulfill requirements according to which a fluid flow to the port of the corresponding working flow path, in which the measuring motor is arranged, has to pass through the measuring motor at all times, i.e. regardless of whether the auxiliary flow path has been generated or not, the measuring motor may be located upstream to the hydraulic component considering a fluid flow to the port of the corresponding working flow path in which the measuring motor is arranged.

In a further embodiment, the hydraulic component may be pilot-operated. In other words, the hydraulic component may be controlled by the hydraulic fluid, i.e. the process medium, in which the hydraulic component is operated. In order for the hydraulic component to be pilot-operated, pressure of the hydraulic steering unit, for example, hydraulic working pressure, may be fed or supplied to the hydraulic component. When the hydraulic working pressure decreases below the predetermined threshold value, this decrease in pressure may also act on the hydraulic component and may for example open the hydraulic component in order to generate the auxiliary flow path. Due to controlling the hydraulic component on a system basis, no electronic control unit is necessarily required to generate the auxiliary flow path.

According to one embodiment, the predetermined threshold value, at which the auxiliary flow path between the first working flow path and the second working flow path is generated, may be preset by a spring element acting on the hydraulic component. In other words, a spring element acting on the hydraulic component may be responsible for when the auxiliary flow path is generated and when it is not. It may therefore not be a control unit or the manual operation of a slider or the like which may be responsible for generating the auxiliary flow path but a spring element. It is therefore possible for the auxiliary flow path to be generated or opened purely on a hydraulic system basis, i.e. solely depending on whether hydraulic working pressure is below a predetermined threshold value or not. In other words, the hydraulic component may be pilot-operated and in addition comprise a spring element. Using a spring element, wherein the spring element may actuate the hydraulic component, may also allow that the auxiliary flow path is closed or blocked when the hydraulic pressure increases above the predetermined threshold value. The spring element therefore allows to generate the auxiliary flow path using simple and inexpensive means.

In one embodiment, the hydraulic working pressure may act against a spring force provided by the spring element. Thus, if the hydraulic working pressure is above the predetermined threshold value, the hydraulic working pressure may be high enough to compress the spring element, wherein compression of the spring element may lead to closure of the auxiliary flow path. As soon as the hydraulic working pressure decreases below the predetermined threshold value, the spring element may at least partially relax. Consequently, an element of the hydraulic component may move due to the relaxation of the spring element and may generate the auxiliary flow path. In one aspect, the hydraulic component may thus be a pilot-operated, spring-loaded hydraulic component. The auxiliary flow path may thus be generated without requiring any electronic components such as electronic control units or the like.

Further, the hydraulic component may generate the auxiliary flow path at least when a pressure force provided by the hydraulic working pressure has vanished. This does not mean that the hydraulic working pressure is zero, but that the hydraulic working pressure has been reduced to atmospheric pressure. In other words, one could also say that the hydraulic working pressure, which was introduced into the hydraulic steering unit by a pump, for example, has disappeared. Consequently, the predetermined threshold value may be at atmospheric pressure. Thus, when the hydraulic working pressure may be at atmospheric pressure, the auxiliary flow path may be generated. If the hydraulic working pressure has decreased so much that atmospheric pressure has been reached or if only hydraulic fluid at atmospheric pressure is present in the hydraulic steering unit, it may be certain that the hydraulic steering unit is in an emergency situation, especially if, for example, a pressure supply to the hydraulic steering unit is no longer functioning.

Typically, a sensor such as a pressure sensor may be integrated within the hydraulic steering unit or the hydraulic steering system and may give an operator or a fully automatic control system information about the system pressure.

In one embodiment, the hydraulic component may be a directional control valve, for example a 3/2-way valve. In a first position, when the hydraulic working pressure is equal to or above the predetermined threshold value, the directional control valve may block the auxiliary flow path and may only allow hydraulic fluid to pass, for example, from a hydraulic bridge, through the working flow path, in which the directional control valve may be arranged, to a corresponding port of this working flow path. In a second position, when the hydraulic working pressure is below the predetermined threshold value, the directional control valve may block the working flow path, in which the directional control valve may be arranged, from, for example, a hydraulic bridge to the corresponding port. However, in this second position the directional control valve may also generate an auxiliary flow path between the first working flow path and the second working flow path. The directional control valve may for example be a spool valve. The aforementioned spring element may be coupled to the spool which may be arranged in a casing in order to open or close the corresponding working flow path as well as the auxiliary flow path.

In an alternative embodiment, the hydraulic component may be a controlled shuttle valve. Preferably, the controlled shuttle valve may comprise a ball as a blocking element. In other words, a ball inside the controlled shuttle valve may be responsible for switching states of the controlled shuttle valve, i.e. for generating or not generating the auxiliary flow path. Using a ball as a blocking element may prevent situations in which a spool of a spool valve as aforementioned may get stuck and would make the hydraulic steering unit inoperable. Control of the controlled shuttle valve may be provided according to the aforementioned aspects, i.e. for example by means of a spring element and pilot-operation by system pressure.

However, the controlled shuttle valve may also be controlled by a control unit or the like. The controlled shuttle valve may comprise a tube in which a blocking element, for example, a ball is freely moveable. The blocking element may be moved depending on hydraulic pressure present in the hydraulic steering unit.

In one embodiment, when the first port and the second port may be fluidically connected to a steering mechanic, a hydraulic circuit formed by the auxiliary flow path between the first port and the second port may be a closed loop hydraulic system. Hence, hydraulic fluid may pass between the two ports without passing through a hydraulic reservoir such as a tank. Still, however, the closed loop hydraulic system may be connected to a hydraulic reservoir such as a tank, for example to prevent cavitation as mentioned above. The closed loop hydraulic system may thus comprise at least a fluid connection by the auxiliary flow path between the first port and the second port and more precise between the corresponding working flow paths, wherein in one of the hydraulic working flow paths a measuring motor is provided. The fact that the hydraulic circuit formed by the auxiliary flow path between the first port and the second port may be a closed loop hydraulic system does not mean that there may be no leakage, i.e. that no small amounts of hydraulic fluid may leave the closed loop. For example, around the measuring motor, for example at a gearset, there may be some leakage into the hydraulic reservoir, such as the tank. Still, by using a closed loop hydraulic system, hydraulic fluid may be moved efficiently between the first port and the second port, for example during emergency steering. In this regard, the direction of fluid flow may easily be reversed. Further, steering via the measuring motor may be carried out in an energy-efficient manner, which may save the use of physical effort or, for example, electricity to operate the measuring motor.

In one embodiment, the measuring motor may be configured to be manually operated. This may mean that an operator, a user or a driver, for example of a vehicle comprising the hydraulic steering unit, may manually operate the measuring motor in order to provide hydraulic auxiliary pressure, for example to steer the vehicle.

In contrast, the measuring motor may also be operated fully automatically. This means, for example, that a control system actuates the measuring motor. In this regard and according to a further embodiment, the measuring motor may be configured to be operated by a motor unit. This motor unit may for example either be operated manually, i.e. directly by an operator, or may be operated fully automatic in order to operate the measuring motor. The actuation of the measuring motor may, for example, involve the rotation of a motor shaft, for example a steering column, which may therefore be performed either manually, e.g. hand-operated by a steering wheel, or via a motor unit. For fully automatic operation of the measuring motor, the motor unit may for example be connected to a steering wheel or a steering column and may thus either rotate the steering wheel or the steering column. The main difference between manual and automatic operation may therefore be seen in having the motor unit taking over the physical effort that would otherwise be required from the operator in order to rotate the steering column. Both types of actuations, i.e. manually or fully automatic, may be advantageous depending on specific use case scenarios but may also be disadvantageous in terms of the costs required, for example.

Furthermore, in one embodiment the hydraulic auxiliary pressure may be lower than the hydraulic working pressure. Consequently, the hydraulic auxiliary pressure may for example only be a pressure used in the hydraulic steering unit in emergency situations, i.e. in an emergency steering mode, but not under normal working conditions, i.e. in a normal steering mode. Thus, for example, when the hydraulic steering unit is fully functional, the hydraulic steering unit is operated at hydraulic working pressure. Since the hydraulic auxiliary pressure may be low compared to the hydraulic working pressure, only a relatively small measuring motor may be required to provide the hydraulic auxiliary pressure. In addition, it is particularly helpful for manual operation of the measuring motor that only a low auxiliary pressure needs to be applied in order to operate the steering mechanic.

Further, the object may also be solved by a method according to claim 15. In this regard, the method may be used for operating a steering mechanic with a hydraulic steering unit according to the aforementioned aspects, and wherein an auxiliary flow path between a first working flow path and a second working flow path of a working flow path arrangement has been generated.

The method may comprise the following steps:
- checking a current steering position of the steering mechanic;
- determining if the current steering position needs to be corrected, for example to avoid a collision;
- operating a measuring motor of the hydraulic steering unit by remotely operating a motor unit of the measuring motor or by manually operating the measuring motor to correct the current steering position, if the current steering position needs to be corrected.

The method may be carried out manually, fully automatically or semi-automatically. Consequently, for example, the first "checking" step may be carried out either visually or by sensors or by using both. For example, a wheel angle sensor may be used to determine a current steering position of the steering mechanic. However, the driver may also simply check the current steering position with the eyes. Other relevant parameters such as speed of the vehicle etc. may also be determined visually using a speedometer, for example, or via corresponding sensors on wheels of the vehicle.

The first step is basically a preparatory step for the second step, in which it is determined whether the current steering position needs to be corrected. For example, to avoid a collision with an object such as a tree or another vehicle or alike.

Other reasons for correcting the steering position are of course not excluded. Other steps may also be required in between the different steps or before or after the steps.

In a fully automated system, for example, the second step may be performed by comparing an actual driving position with a desired driving position by a control system. For example, satellite navigation data from a GPS system may be used to determine the actual driving position based on the satellite navigation data.

Depending on whether the vehicle is controlled directly by a driver or, for example, by a control system either fully automatically or by a person sitting in a control terminal and, for example, monitoring the vehicle position using monitors or the like, the measuring motor may be operated. For example, for remote operation of the motor unit of the measuring motor, a control signal may be transmitted to the motor unit or to its controller in order to operate the measuring motor in accordance with the control signal via the motor unit.

Finally, it should be noted that the method of operating a steering mechanic, is a method which is performed, when the auxiliary flow path is generated. In other words, the method is performed when the hydraulic working pressure is below a predetermined threshold value. The method may thus be a method performed in an emergency situation, in which no hydraulic working pressure can for example be provided. The method may thus be performed as an emergency steering mode.

Safe steering with the hydraulic steering unit according to the disclosure is therefore also possible in an emergency situation.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: shows a hydraulic circuit of a hydraulic steering unit and a steering mechanic, wherein the hydraulic steering unit comprises a 3/2-way valve, and wherein the hydraulic steering unit is in an emergency steering mode;
- Fig. 2: shows a hydraulic circuit of a hydraulic steering unit and a steering mechanic, wherein the hydraulic steering unit comprises a controlled shuttle valve, and wherein the hydraulic steering unit is in a normal steering mode; and
- Fig. 3: shows an example of a controlled shuttle valve, for example used in the schematic hydraulic circuit shown in Fig. 2.

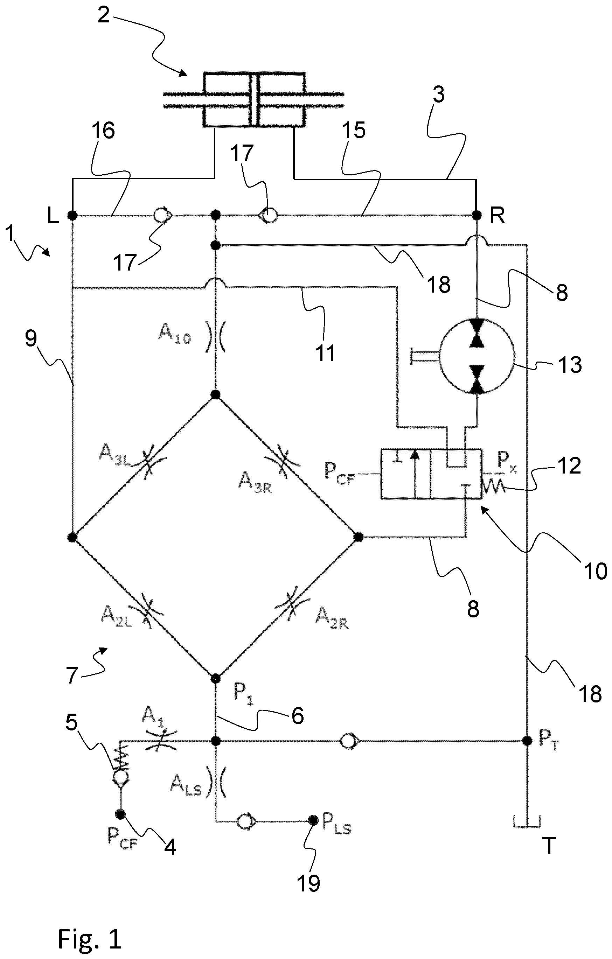

Fig. 1 shows a first example of a hydraulic steering unit 1 fluidically connected to a steering mechanic 2. The hydraulic steering unit 1 is fluidically connected to the steering mechanic 2 via a first port R and a second port L. Respective fluid lines 3 are depicted, which allow hydraulic fluid to be conducted from the ports R, L to the steering mechanic 2.

In Fig. 1, the steering mechanic 2 comprises a symmetric hydraulic cylinder in which a piston is moved to opposite direction dependent on whether hydraulic pressure is supplied to the steering mechanic 2 via the first port R or the second port L. Still, however, the steering mechanic could also have an asymmetrical hydraulic cylinder instead.

The hydraulic steering unit 1 further comprises a pump (not shown) which is configured to supply pressurized hydraulic fluid at hydraulic working pressure P_{CF} via a high pressure port 4 to the hydraulic steering unit 1. The hydraulic fluid at hydraulic working pressure P_{CF} passes through a spring-loaded check valve 5 and a variable main orifice A₁ in order to be provided via a main flow path 6 to a hydraulic bridge 7 with variable orifices A_{2L}, A_{2R}, A_{3L} and A_{3R}.

The main orifice A₁ may allow to control the hydraulic fluid flow to the hydraulic bridge 7 which may for example be supplied with hydraulic fluid at a first pressure P₁, which may be different from the hydraulic working pressure P_{CF}. A first right orifice A_{2R} of the variable orifices A_{2L}, A_{2R}, A_{3L} and A_{3R} is arranged between the main flow path 6 and a first working flow path 8. Likewise, a first left orifice A_{2L} of the variable orifices A_{2L}, A_{2R}, A_{3L} and A_{3R} is arranged between the main flow path 6 and a second working flow path 9.

The first working flow path 8 allows hydraulic fluid to be supplied to the first port R, when the hydraulic working pressure P_{CF} is not below a predetermined threshold value, for example, when the hydraulic working pressure P_{CF} is not decreased below a predetermined threshold value. However, when the hydraulic working pressure P_{CF} is below said predetermined threshold value a hydraulic component arranged in the first working flow path 8, here a 3/2-way valve 10 arranged in the first working flow path 8, for example a spool valve, may block the hydraulic fluid from passing from the hydraulic bridge 7 via the first working flow path 8 to the first port R.

A maximum hydraulic working pressure may for example be supplied to the hydraulic steering unit 1 via the high pressure port 4 and may correspond to the maximum hydraulic working pressure which may for example be possible to be provided by a pump fluidically connected to the high pressure port 4. In addition, the maximum hydraulic working pressure may be limited by the hydraulic steering unit 1. In other words, although a pump may for example be configured to apply fluid at higher pressure, the maximum hydraulic working pressure should not exceed a maximum pressure which can be handled by the hydraulic steering unit 1 without being destroyed.

The hydraulic steering unit 1 shown in Fig. 1 may thus be considered to be in an emergency steering mode in which an auxiliary flow path 11 has been generated. In this regard, the 3/2-way valve 10 comprises a connection to the hydraulic working pressure P_{CF} depicted by a dashed line on the left side of the 3/2-way valve 10. On the opposite side of the 3/2-way valve 10 a spring element 12 is depicted and a pressure Px which may refer to a predetermined threshold value of a pressure at which the hydraulic component, here the 3/2-way valve 10, generates the auxiliary flow path 11.

Although, the connection to the hydraulic working pressure P_{CF} and the spring element 12 are only depicted schematically, the 3/2-way valve 10 may be regarded as pilot-operated. Therefore, switching between a current state, in which the first working flow path 8 is partially blocked and the hydraulic working pressure P_{CF} is below a predetermined threshold value, and another state, in which the first working flow path 8 between the hydraulic bridge 7 and the first port R is open and the hydraulic working pressure P_{CF} is above or at least equal to the predetermined threshold value, may be performed by the hydraulic fluid, i.e. the process medium, in which the 3/2-way valve 10 is operated. In other words, the hydraulic component may be operated on a system basis.

Further, a measuring motor 13 is arranged in the first working flow path 8 between the hydraulic component and the first port R. More precisely, the measuring motor 13 is arranged upstream with respect to the first port R considering a fluid flow to the first port R. Furthermore, the measuring motor 13 here is a bi-rotating pump motor which may be manually operated in order to provide hydraulic fluid at hydraulic auxiliary pressure.

The auxiliary flow path 11 fluidically connects the first working flow path 8 with the second working flow path 9 and therefore allows the measuring motor 13 to supply hydraulic fluid at hydraulic auxiliary pressure also to the first port R or to the second port L. Thus, depending on the rotational movement of the measuring motor 13, the respective first port R or second port L may be supplied with pressurized fluid and the steering mechanic 2 may be operated.

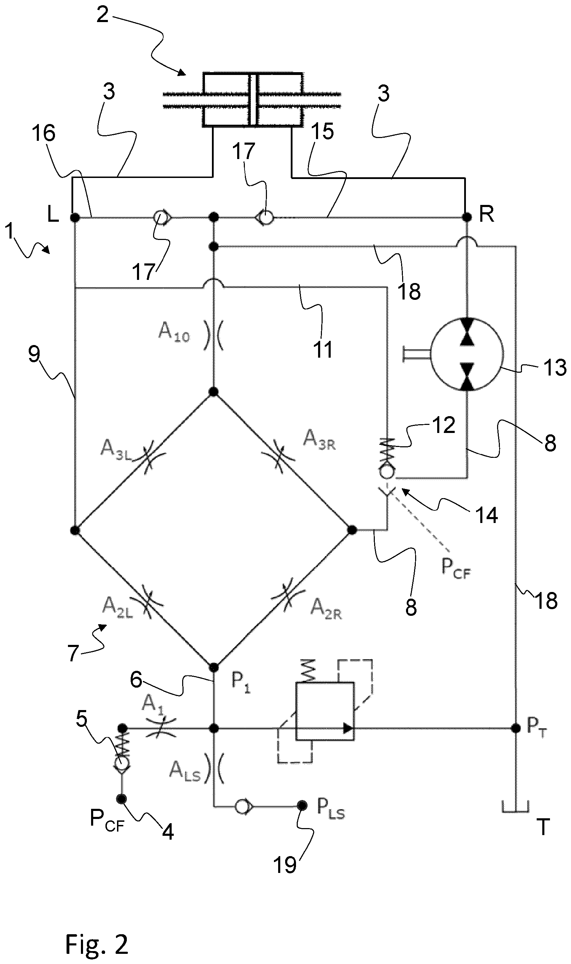

The hydraulic steering unit 1 depicted in Fig. 2 is similar to the hydraulic steering unit 1 shown in Fig. 1. The main difference may be seen in the type of hydraulic component used. Therefore, same elements, i.e. elements that perform a similar function or serve a similar purpose, may have the same reference numbers in Figs. 1 and 2.

In Fig. 2, the hydraulic component responsible for generating the auxiliary flow path 11 is provided by a controlled shuttle valve 14. Also here, the hydraulic working pressure P_{CF} is supplied to the controlled shuttle valve 14 and may thus be responsible for operating the controlled shuttle valve 14. In the depicted condition shown in Fig. 2, the hydraulic working pressure P_{CF} is not below a predetermined threshold value. Accordingly, the auxiliary flow path 11 has not yet been generated. The first port R is therefore directly connected to the hydraulic bridge 7 via the first working flow path 8.

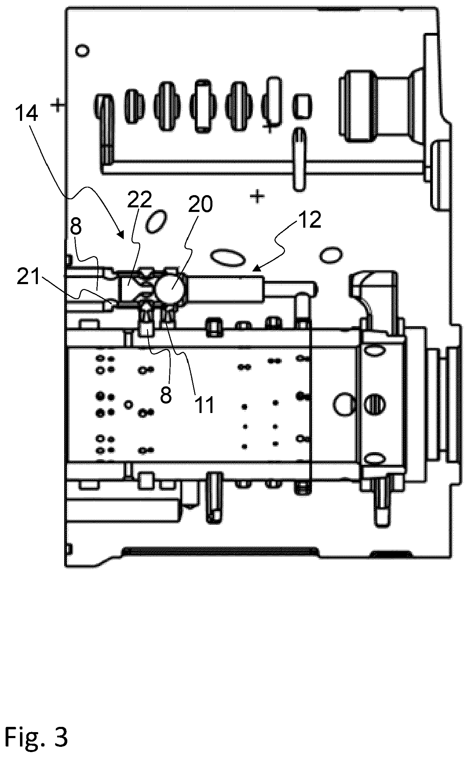

Since hydraulic working pressure P_{CF} is provided to the hydraulic steering unit 1 and the auxiliary flow path 11 is not generated, a hydraulic steering system, in which the hydraulic steering unit 1 according to Fig. 2 is arranged, may be regarded in a normal steering mode, i.e. in a steering mode in which all components and elements are fully functional. One example of a controlled shuttle valve 14 will be described in more detail with respect to Fig. 3 below.

When, in the emergency steering mode shown in Fig. 1, the measuring motor 13 is used to provide hydraulic auxiliary pressure to the steering mechanic 2, for example via the first port R, the measuring motor 13 simultaneously draws hydraulic fluid from the second port L. In order to avoid cavitation, first and second pressure compensation paths 15, 16 are provided at each port R and L, which connect the corresponding ports R or L to a hydraulic reservoir, here to a tank port T at tank pressure P_{T}, via respective check valves 17 and a tank flow path 18.

In this respect, for example, when a pressure at the second port L becomes too low, i.e. when negative pressure becomes too high, the check valve 17 in the second pressure compensation path 16 that fluidically connects the second port L to the tank port T via the tank flow path 18 may open and allow hydraulic fluid to flow from the tank to the second port L. In a similar manner, hydraulic fluid from the tank port T may be supplied via the first pressure compensation path 15 to the first port R, when a steering operation is performed in the opposite direction, i.e. when for example hydraulic fluid is pumped by the measuring motor 13 towards the second port L.

Further, the hydraulic bridge 7 is fluidically connected to the tank flow path 18 via a tank orifice A₁₀. The tank orifice A₁₀ is a fixed orifice and may be used during normal steering, i.e. when the hydraulic working pressure is not below the predetermined threshold value, to create a back pressure independent of the opening of the orifices of the hydraulic bridge 7. However, there may for example be no hydraulic fluid wasted via the tank orifice A₁₀, when the is below the predetermined threshold value and the auxiliary flow path 11 is generated.

Thus, during emergency steering, when a vehicle is for example steered to the right, which means that hydraulic auxiliary pressure may be supplied with the help of the measuring motor 13 and via the first port R to the steering mechanic 2, the hydraulic fluid may simultaneously be drawn from the second port L via the auxiliary flow path 11, the hydraulic component and the measuring motor 13 to the first port R. At the same time a second left orifice A_{3L} may be open and may allow hydraulic fluid to pass from the tank port T via the tank flow path 18, the tank orifice A₁₀ and the second left orifice A_{3L} to the second working flow path 9 and may for example compensate for leakages.

When in the emergency steering mode, the hydraulic fluid is moved in the opposite direction by means of the measuring motor 13, i.e. to the second port L, the second left orifice A_{3L} may be closed. However, at this time the first left orifice A_{2L} may be open and may allow for a fluid connection to the tank port T and a low pressure port 19, which is here a load sensing port with a load sensing pressure P_{LS}. A load sensing orifice A_{LS} is connected upstream of the load sensing port.

In the normal steering mode, i.e. when the auxiliary flow path 11 has not been generated, the hydraulic bridge 7 and as such the orifices A_{2L}, A_{2R}, A_{3L} and A_{3R} are opened and closed, for example by rotating a steering wheel. For example, when pressure is to be supplied to the first port R in order to provide a corresponding steering movement of the steering mechanic 2, the first right orifice A_{2R} and the second left orifice A_{3L} may be opened, wherein the first left orifice A_{2L} and the second right orifice A_{3R} may be closed. However, when pressure is to be supplied to the second port L in order to provide a corresponding steering movement of the steering mechanic 2, the first right orifice A_{2R} and the second left orifice A_{3L} may be closed, wherein the first left orifice A_{2L} and the second right orifice A_{3R} may be opened.

When the hydraulic working pressure P_{CF} decreases below a predetermined threshold value, the auxiliary flow path 11 may be generated and the steering mechanic 2 may still be operated by the measuring motor 13. As aforementioned, the auxiliary flow path 11 may be generated by a hydraulic component such as a 3/2-way valve 10 or a controlled shuttle valve 14.

An exemplary controlled shuttle valve 14 is shown in Fig. 3, wherein the first working flow path 8 is open. The corresponding hydraulic steering unit 1 comprising this controlled shuttle valve 14 is thus in normal steering mode and the hydraulic working pressure P_{CF} is not below a predetermined threshold value. However, as soon as the hydraulic working pressure P_{CF} currently acting on a ball 20, which is a blocking element of the controlled shuttle valve 14, and against a spring element 12 is below the predetermined threshold value, the ball 20 is moved against a bearing 21.

To be more precise, in the depicted position of the ball 20, a pilot piston 22 is used to apply pressure onto the ball 20. The spring element 12 may support movement of the ball 20 in the opposite direction and against the bearing but is not directly shown as it is arranged inside a spring chamber. Using a ball 20 in the controlled shuttle vale 14 instead of for example a spool in a 3/2-way valve may prevent that the hydraulic component gets stuck and may become inoperable.

In a position, in which the ball 20 is pressed by the spring element 12 against the bearing 21, the first working flow path 8, for example form the hydraulic bridge 7 (not shown in Fig. 3) to the first pressure port R (not shown in Fig. 3) may be blocked. However, the auxiliary flow path 11 may be generated so that hydraulic fluid may pass from the first pressure port R (not shown in Fig. 3) via the auxiliary flow path 11 to the second working flow path 9 (not shown in Fig. 3).

The hydraulic steering unit 1 may thus provide a comparably simple way of supplying hydraulic fluid via the first port R or the second port L to the steering mechanic 2. Further, in an emergency steering mode a measuring motor 13 may be used to supply hydraulic fluid via the respective ports R and L essentially equally well. In addition, due to connection to the tank port T in the emergency steering mode also pressure shocks may be absorbed by the hydraulic cylinder of the steering mechanic 2. Hence, the hydraulic steering unit 1 allows for improved steering conditions especially when in an emergency steering mode.

### List of reference signs

- 1: hydraulic steering unit
- 2: steering mechanic
- 3: fluid line
- 4: high pressure port
- 5: spring-loaded check valve
- 6: main flow path
- 7: hydraulic bridge
- 8: first working flow path
- 9: second working flow path
- 10: 3/2-way valve
- 11: auxiliary flow path
- 12: spring element
- 13: measuring motor
- 14: controlled shuttle valve
- 15: first pressure compensation path
- 16: second pressure compensation path
- 17: check valve
- 18: tank flow path
- 19: low pressure port
- 20: ball
- 21: bearing
- 22: pilot piston

- A₁: main orifice
- A_{2L}: first left orifice
- A_{2R}: first right orifice
- A_{3L}: second left orifice
- A_{3R}: second right orifice
- A₁₀: tank orifice
- P_{CF}: hydraulic working pressure
- P_{T}: tank pressure
- P_{LS}: load sensing pressure

- R: first port
- L: second port
- T: tank port

## Claims

1. A hydraulic steering unit (1) comprising a supply port arrangement configured to supply hydraulic working pressure (P_{CF}) via a working flow path arrangement to a steering mechanic (2),
wherein the working flow path arrangement comprises at least a first working flow path (8) with a first port (R) configured to be fluidically connected to the steering mechanic (2) and a second working flow path (9) with a second port (L) configured to be fluidically connected to the steering mechanic (2),
wherein a measuring motor (13) is arranged in one of the working flow paths (8, 9) of the working flow path arrangement, and
wherein the working flow path arrangement is configured to supply a hydraulic auxiliary pressure provided by the measuring motor (13) via each of the ports (R, L), when the hydraulic working pressure (P_{CF}) is below a predetermined threshold value,
**characterized in that** when the hydraulic working pressure (P_{CF}) is below the predetermined threshold value, an auxiliary flow path (11) between the first working flow path (8) and the second working flow path (9) is generated.

2. The hydraulic steering unit (1) according to claim 1, **characterized in that** the measuring motor (13) is permanently arranged in one of the at least two working flow paths (8, 9).

3. The hydraulic steering unit (1) according to claim 1 or 2, **characterized in that** the auxiliary flow path (11) is generated by actuation of a hydraulic component.

4. The hydraulic steering unit (1) according to claim 3, **characterized in that** the hydraulic component is pilot-operated.

5. The hydraulic steering unit (1) according to any one of the preceding claims, **characterized in that** the predetermined threshold value, at which the auxiliary flow path (11) between the first working flow path (8) and the second working flow path (9) is generated, is preset by a spring element (12) acting on the hydraulic component.

6. The hydraulic steering unit (1) according to claim 5, **characterized in that** the hydraulic working pressure (P_{CF}) acts against a spring force provided by the spring element (12).

7. The hydraulic steering unit (1) according to any one of claims 3 to 6, **characterized in that** the hydraulic component generates the auxiliary flow path (11) at least when a pressure force provided by the hydraulic working pressure (P_{CF}) has vanished.

8. The hydraulic steering unit (1) according to any one of claims 3 to 7, **characterized in that** the hydraulic component is a directional control valve, for example a 3/2-way valve (10).

9. The hydraulic steering unit (1) according to any one of claims 3 to 7, **characterized in that** the hydraulic component is a controlled shuttle valve (14).

10. The hydraulic steering unit (1) according to any one of the preceding claims, **characterized in that**, when the first port (R) and the second port (L) are fluidically connected to a steering mechanic (2), a hydraulic circuit formed by the auxiliary flow path (11) between the first port (R) and the second port (L) is a closed loop hydraulic system.

11. The hydraulic steering unit (1) according to any one of the preceding claims, **characterized in that** the measuring motor (13) is configured to be manually operated.

12. The hydraulic steering unit (1) according to any one of the preceding claims, **characterized in that** the measuring motor (13) is configured to be operated by a motor unit.

13. The hydraulic steering unit (1) according to any one of the preceding claims, **characterized in that** the hydraulic auxiliary pressure is lower than the hydraulic working pressure (P_{CF}).

14. A method of operating a steering mechanic (2) with a hydraulic steering unit (1) according to any one of claims 1 to 14 in an emergency situation, wherein an auxiliary flow path (11) between a first working flow path (8) and a second working flow path (9) of a working flow path arrangement has been generated, and
wherein the method comprises the following steps:
• checking a current steering position of the steering mechanic (2);
• determining if the current steering position needs to be corrected, for example to avoid a collision;
• operating a measuring motor (13) of the hydraulic steering unit (1) by remotely operating a motor unit of the measuring motor (13) or by manually operating the measuring motor (13 to correct the current steering position, if the current steering position needs to be corrected.

## Amended claims

### Amended claims in accordance with Rule 137(2) EPC.

1. A hydraulic steering unit (1) comprising a supply port arrangement configured to supply hydraulic working pressure (P_{CF}) via a working flow path arrangement to a steering mechanic (2),
wherein the working flow path arrangement comprises at least a first working flow path (8) with a first port (R) configured to be fluidically connected to the steering mechanic (2) and a second working flow path (9) with a second port (L) configured to be fluidically connected to the steering mechanic (2),
wherein a measuring motor (13) is arranged in one of the working flow paths (8, 9) of the working flow path arrangement, and
wherein the working flow path arrangement is configured to supply a hydraulic auxiliary pressure provided by the measuring motor (13) via each of the ports (R, L), when the hydraulic working pressure (P_{CF}) is below a predetermined threshold value,
**characterized in that** the hydraulic steering system (1) includes a hydraulic component that is responsible for opening an auxiliary flow path (11) between the first working flow path (8) and the second working flow path (9), wherein said hydraulic component is switchable between a first state and a second state, wherein the auxiliary flow path (11) is not open in the first state in which the hydraulic working pressure (P_{CF}) is above or equal to a predetermined threshold value and open in the second state in which the hydraulic working pressure (P_{CF}) is below the predetermined threshold value.

2. The hydraulic steering unit (1) according to claim 1, **characterized in that** the measuring motor (13) is permanently arranged in one of the at least two working flow paths (8, 9).

3. The hydraulic steering unit (1) according to any one of the preceding claims, **characterized in that** the hydraulic component is pilot-operated.

4. The hydraulic steering unit (1) according to any one of the preceding claims, **characterized in that** the predetermined threshold value, at which the auxiliary flow path (11) between the first working flow path (8) and the second working flow path (9) is opened, is preset by a spring element (12) acting on the hydraulic component.

5. The hydraulic steering unit (1) according to claim 4, **characterized in that** the hydraulic working pressure (P_{CF}) acts against a spring force provided by the spring element (12).

6. The hydraulic steering unit (1) according to any one of the preceding claims, **characterized in that** the hydraulic component opens the auxiliary flow path (11) at least when a pressure force provided by the hydraulic working pressure (P_{CF}) has vanished.

7. The hydraulic steering unit (1) according to any one of the preceding claims, **characterized in that** the hydraulic component is a directional control valve, for example a 3/2-way valve (10).

8. The hydraulic steering unit (1) according to any one of the claims 1 to 6, **characterized in that** the hydraulic component is a controlled shuttle valve (14).

9. The hydraulic steering unit (1) according to any one of the preceding claims, **characterized in that**, when the first port (R) and the second port (L) are fluidically connected to a steering mechanic (2), a hydraulic circuit formed by the auxiliary flow path (11) between the first port (R) and the second port (L) is a closed loop hydraulic system.

10. The hydraulic steering unit (1) according to any one of the preceding claims, **characterized in that** the measuring motor (13) is configured to be manually operated.

11. The hydraulic steering unit (1) according to any one of the preceding claims, **characterized in that** the measuring motor (13) is configured to be operated by a motor unit.

12. The hydraulic steering unit (1) according to any one of the preceding claims, **characterized in that** the hydraulic auxiliary pressure is lower than the hydraulic working pressure (P_{CF}).

13. A method of operating a steering mechanic (2) with a hydraulic steering unit (1) according to any one of claims 1 to 12 in an emergency situation, wherein the auxiliary flow path (11) between the first working flow path (8) and the second working flow path (9) of the working flow path arrangement has been opened, and
wherein the method comprises the following steps:
• checking a current steering position of the steering mechanic (2);
• determining if the current steering position needs to be corrected, for example to avoid a collision;
• operating the measuring motor (13) of the hydraulic steering unit (1) by remotely operating a motor unit of the measuring motor (13) or by manually operating the measuring motor (13) to correct the current steering position, if the current steering position needs to be corrected.
